Europäisches Patentamt

European Patent Office

Office européen des brevets

(11) Veröffentlichungsnummer: **0 030 569**
**B1**

(12) **EUROPÄISCHE PATENTSCHRIFT**

(45) Veröffentlichungstag der Patentschrift:
14.03.84

(21) Anmeldenummer: 79105115.4

(22) Anmeldetag: 12.12.79

(51) Int. Cl.³: **B 01 D 17/04**

(54) Einrichtung zum Abscheiden von Öl aus Dispersionen.

(43) Veröffentlichungstag der Anmeldung:
24.06.81 Patentblatt 81/25

(45) Bekanntmachung des Hinweises auf die Patenterteilung:
14.03.84 Patentblatt 84/11

(84) Benannte Vertragsstaaten:
AT BE CH DE FR GB IT NL SE

(56) Entgegenhaltungen:
DE - A - 2 546 043
DE - A - 2 629 490
DE - A - 2 755 837
FR - A - 1 376 377
US - A - 3 450 632
US - A - 3 960 719
US - A - 4 058 456

(73) Patentinhaber: Girmes-Werke AG,
D-4155 Grefrath-Oedt 1 (DE)

(72) Erfinder: Kerres, Bruno, Dr., Dipl.-Chem., Büschen 27,
D-4054 Nettetal 1 - Hinsbeck (DE)

(74) Vertreter: Gille, Christian, Dipl.-Ing., Redies , Redies,
Türk & Gille Bruckner Strasse 20,
D-4000 Düsseldorf 13 (DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Einrichtung zum Abscheiden von Öl aus Dispersionen

Die Erfindung betrifft eine Einrichtung zum Abscheiden von Öl aus wäßrigen oder Lösungsmittel-Dispersionen, mit einem porösen textilen Flächengebilde, das wenigstens teilweise aus superfeinen oleophilen Kunststoff-Fasern mit einem Einzeltiter unter 1 dtex besteht, durch das die Dispersion hindurchgeleitet wird.

Es ist bisher mit einfachen technischen Maßnahmen nicht möglich, in Wasser feinverteilte Öltröpfchen mit einem Durchmesser von etwa 1 bis 30 μm, vorzugsweise solche mit einem Durchmesser von unter 10 μm, durch mechanische Mittel wie Filtration oder Zentrifugieren abzuscheiden. Die Problematik liegt darin, daß die feinen Öltröpfchen sich in einem Schwebezustand in der Flüssigkeit befinden und trotz ihres gegenüber der Flüssigkeit geringeren spezifischen Gewichtes nicht oder nicht in technisch interessanten Zeiten an die Flüssigkeitsoberfläche hochsteigen, insbesondere dann nicht, wenn in der Flüssigkeit oberflächenaktive Substanzen enthalten sind. Will man den Ölgehalt von Abwässern senken oder stabilisierte Öl-in-Wasser-Dispersionen wie beispielsweise Kühlmittel für spanabhebende Metallbearbeitung, die durch andere Öle verunreinigt worden sind, von diesen anderen Ölen reinigen, müssen auch derartige feine und feinste Öltröpfchen abgeschieden werden können.

Zum Abtrennen der Tröpfchen einer Flüssigkeit von einer zweiten Flüssigkeit, die mit der ersten Flüssigkeit nicht mischbar ist, ist es bekannt (FR-A-1 378 377), die aus den beiden Flüssigkeiten bestehende Dispersion durch einen Filz, der aus Kunststoff-Fasern mit einem Einzeltiter unter 1 dtex gebildet ist, hindurchzuleiten, um eine Koaleszenz der Tröpfchen zum Abscheiden derselben zu erreichen.

Es ist weiterhin bekannt (DE-A-2 755 837), als Koaleszenzmedium ein Nadelvlies zu verwenden, dessen Fasern sich im wesentlichen quer zur Durchströmrichtung der zu behandelnden Dispersion erstrecken.

Die Aufgabe der Erfindung besteht darin, eine Einrichtung zu schaffen, mit der in Flüssigkeiten äußerst fein verteilte Öle innerhalb von für die technische Anwendung interessanten Zeiten zur Koaleszenz gebracht werden können und an die Oberfläche der Flüssigkeit hochsteigen, um sie dann mit üblichen Techniken aus der Flüssigkeit entfernen zu können.

Diese Aufgabe wird bei einer Einrichtung der genannten Gattung erfindungsgemäß dadurch gelöst, daß das textile Gebilde ein gestricktes, gerascheltes oder gewirktes Polgewirke oder ein Polgewebe ist, dessen Pol aus den superfeinen oleophilen Fasern besteht. Es hat sich gezeigt, daß die Koaleszenz der Öltröpfchen an derartigen dreidimensionalen textilen Flächengebilden besonders günstig ist, ohne daß die Dispersion mit hohem Gegendruck durch das Koaleszenzmedium hindurchströmen muß. Die in der Dispersion enthaltenen feinen und feinsten Öltröpfchen koaleszieren am dreidimensionalen textilen Flächengebilde zu größeren Öltropfen, die in der Flüssigkeit nicht im Schwebezustand gehalten werden, sondern aufgrund ihres gegenüber der Flüssigkeit geringeren spezifischen Gewichtes schnell an die Oberfläche steigen, wo sie sich mit weiteren Öltropfen vereinigen und eine beispielsweise durch mechanische Mittel wie Zentrifugieren leicht abzuscheidende Ölschicht bilden.

Die superfeinen oleophilen Kunststoff-Fasern haben vorzugsweise einen Einzeltiter im Bereich von 0,05 dtex bis 0,5 dtex. Derartige Fasern werden beispielsweise hergestellt, indem man unterschiedliche synthetische Polymere von beispielsweise Polyamid und Polyäthylenterephthalat gemeinsam in bestimmter Querschnittsverteilung oder mit einer Matrixverteilung im Querschnitt aus einer Spinndüse als geschmolzene Polymere zu Fäden mit einem über 1 dtex liegenden Einzeltiter ausspinnt. In dieser Form wird das Material zu einem textilen Flächengebilde verarbeitet. Anschließend erfolgt eine chemische Behandlung, beispielsweise mit Quellmitteln, die ein Aufbrechen des Faser- oder Fadenquerschittes in viele Einzeltiter bewirkt.

Ein dreidimensionales textiles Flächengebilde im Sinne des Anmeldungsgegenstandes ist ein Flächengebilde, das wenigstens auf einer Seite eines flächigen Substrates wie eines Gewebes, Gewirkes, Filzes und dergleichen eine aus Fasern oder Fäden gebildete Polschicht aufweist. Solche dreidimensionalen textilen Flächengebilde können als Vlies geformt oder zu einem Polgewirke abgestrickt, geraschelt oder gewirkt oder auch zu einem Polgewebe gewebt sein. Wichtig ist, daß sie ebenso wie einfache textile Flächengebilde eine gewisse Porosität aufweisen, um den Flüssigkeitsanteil der zu reinigenden Dispersionen durchzulassen und lediglich die aus der Dispersion abzuscheidenden Öle zurückzuhalten.

Die erfindungsgemäß verwendeten textilen Flächengebilde haben in überraschender Weise im Gegensatz zu aus üblichen Fasern hergestellter Polware die Eigenschaft, beim Durchleiten von beispielsweise Öl-in-Wasser-Dispersionen ohne großen Druckverlust die von der Dispersion mitgeführten Öltröpfchen an den superfeinen Fasern zurückzuhalten, so daß sich feinste Öltröpfchen zu größeren Öltropfen verbinden, welche nach Wachstum auf eine bestimmte Tropfengröße sich vom textilen Fasermaterial lösen und aufgrund des geringeren spezifischen Gewichtes des Öles rasch an die Oberfläche der Flüssigkeit hochsteigen, wo sie eine Ölschicht bzw. einen Ölfilm bilden, der leicht zu entfernen ist. Die für ein wirksames Entfernen von Ölen aus wäßrigen oder sonstigen Dispersionen notwendige Koaleszenz feinster Öltröpfchen zu größeren Tröpfchen oder Tropfen, die von selbst an die Flüssigkeitsoberfläche hochsteigen, wird mit der erfindungsgemäß ausgebildeten und verwendeten Einrichtung also dadurch erreicht, daß die in der Dispersion schwebenden und nicht oder nur schwer und langsam an deren Oberfläche steigenden Öltröpfchen von den superfeinen Fasern des beispielsweise dreidimensionalen Flächengebildes zunächst gehalten und, wenn sie zu größeren Tropfen oder Tröpfchen agglomeriert sind, von dieser Faserschicht freigegeben werden und schnell an die Flüssigkeitsoberfläche hochsteigen. Die Faseroberfläche des sozusagen als »Filter« verwendeten textilen Flächengebildes wird somit selbsttätig immer wieder von Ölansammlungen befreit, so daß die Faserschicht selbsttätig gereinigt wird und stets für neue Koaleszenz-Vorgänge bereit ist.

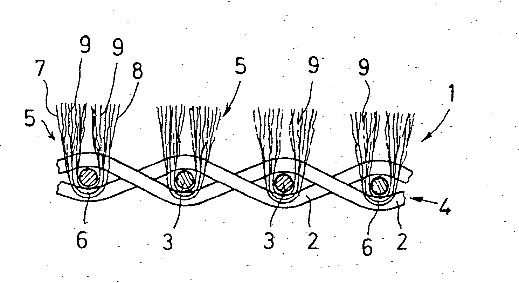

In der Zeichnung ist ein Ausführungsbeispiel einer erfindungsgemäß ausgebildeten Einrichtung zum Abscheiden von Öl aus wäßrigen oder Lösungsmittel-Dispersionen schematisch in einem stark vergrößerten senkrechten Teilschnitt dargestellt.

Die Einrichtung umfaßt ein dreidimensionales textiles Flächengebilde 1 in Form eines aufgeschnittenen Plüsches, das ein aus einander überkreuzenden Fäden 2 und 3 gebildetes Substrat 4 mit darin eingebundenen Polnoppen 5 aufweist.

Jede Polnoppe 5 besteht aus einem hier V-förmig eingebundenen Faden 6, dessen Enden 7 und 8 hochstehen und der durch eine chemische Behandlung mit beispielsweise einem Quellmittel zu feinen bzw. feinsten Einzelfasern 9 aufgebrochen ist. Die Einzelfasern 9 sind superfein mit einem Einzeltiter unter 1 dtex, der vorzugsweise im Bereich von 0,05 dtex bis 0,5 dtex liegt, und haben oleophile Eigenschaften, d. h. üben auf Öl, auch wenn es in feinster Verteilung in einer Dispersion vorhanden ist, eine gewisse Affinität aus, um insbesondere kleinste Öltröpfchen zu veranlassen, sich an die Einzelfasern 9 anzulegen, bis sie durch Anlagerung weiterer kleinster Öltröpfchen sich zu größeren Tröpfchen oder Tropfen vereinigt haben, die in einer Dispersion nicht in der Schwebe bleiben, sondern sich aufgrund des gegenüber der Flüssigkeit geringeren spezifischen Gewichtes des Öles von den Einzelfasern 9 lösen und schnell an die Flüssigkeitsoberfläche hochsteigen. Auch die den Rücken bildenden Fäden 2 und 3 können aus dem beschriebenen superfeinen Fadenmaterial bestehen.

Es wurde gefunden, daß ein derartiges, aus aufgeschnittenem Plüsch bestehendes dreidimensionales textiles Flächengebilde, das in Pol und Rücken aus superfeinen oleophilen Fasern besteht, das z. B. in Querrichtung zwölf Noppen pro cm und in Längsrichtung sechs Noppen pro cm aufweist, wobei die Noppenlänge über Grund etwa 6 mm und die gesamte Noppenlänge etwa 12 mm beträgt, geeignet ist, um wirksam auch feinste bzw. kleinste Öltröpfchen aus wäßrigen oder Lösungsmittel-Dispersionen abzuscheiden, indem die Tröpfchen an der Pol- und Rückseite des dreidimensionalen Flächengebildes zurückgehalten werden und zu größeren Tropfen oder Tröpfchen koaleszieren, die dann an die Flüssigkeitsoberfläche hochsteigen. Die von Ölrückständen zu befreienden Dispersionen werden also von einer Seite aus durch das dreidimensionale Flächengebilde hindurchgeleitet, um sie zu »filtrieren« und dabei von Ölrückständen zu reinigen.

Das textile Flächengebilde 1 ist, um ihm die benötigte Formstabilität zu verleihen, auf einem nicht dargestellten Träger wie einem Rohr, Schlauch, einer Keramik-Hülse und dergleichen angeordnet, beispielsweise aufgezogen, und besteht zumindest teilweise aus den superfeinen Einzelfasern 9.

Eine Polware ist gegenüber einem Flachgewebe vorzuziehen, da sie gegenüber der durchfließenden Flüssigkeit einen geringeren Gegendruck als ein Flachgewebe aufbaut, das eine entsprechende Koaleszenz erzeugt.

## Patentansprüche

1. Einrichtung zum Abscheiden von Öl aus wäßrigen oder Lösungsmittel-Dispersionen, mit einem porösen textilen Flächengebilde, das wenigstens teilweise aus superfeinen oleophilen Kunststoff-Fasern mit einem Einzeltiter unter 1 dtex besteht, durch das die Dispersion hindurchgeleitet wird, dadurch gekennzeichnet, daß das textile Flächengebilde ein gestricktes, gerascheltes oder gewirktes Polgewirke oder ein Polgewebe ist, dessen Pol aus den superfeinen oleophilen Fasern besteht.

2. Einrichtung nach Anspruch 1, dadurch gekennzeichnet, daß wenigstens die Polnoppen (5) des textilen Flächengebildes (1) mittels eines Quellmittels in viele oleophile feine Einzelfasern (9) aufgebrochen sind.

## Claims

1. Apparatus for the separation of oil from aqueous or solvent dispersions comprising a porous textile sheet consisting at least partly of superfine oleophilic synthetic fibers having an individual titer of less than 1 dtex through which the dispersion is passed, characterized in that the textile sheet is a knitted, rascheled or weaved pile texture or pile cloth the pile of which consists of superfine oleophilic fibers.

2. Apparatus as defined in claim 1, characterized in that at least the pile knobs of the textile sheet are fractioned by means of a swelling agent into a plurality of oleophilic fine individual fibers.

## Revendications

1. Dispositif pour séparer l'huile des dispersions aqueuses ou de solvants comprenant une feuille textile poreuse composée au moins partiellement de fibres synthétiques oléophiles superfines d'un titre individuel de moins de 1 dtex, ladite feuille étant traversée par la dispersion, caractérisé en ce que la feuille textile est un tissu à poils tricoté, à mailles Rachel ou tissé dont le poil est composé des dites fibres oléophiles superfines.

2. Dispositif suivant la revendication 1, caracterisé en ce que au moins les noppes des poils de la feuille textile sont fractionnées au moyen d'un gonflant en une multitude de fibres individuelles oléophiles fines.